# EUROPÄISCHE PATENTSCHRIFT

(11) **EP 1 054 800 B1**
(45) Veröffentlichungstag und Bekanntmachung des Hinweises auf die Patenterteilung: **02.10.2002**
(21) Anmeldenummer: 99907470.1
(22) Anmeldetag: 01.02.1999
(51) Int. Cl.: B62D 1/06

(54) **HEIZUNGSANORDNUNG FÜR DIE BEHEIZUNG EINES BEWEGLICHEN TEILS EINES KRAFTFAHRZEUGES, INSBESONDERE LENKRADHEIZUNG**
HEATING DEVICE FOR HEATING A MOVEABLE PART OF AN AUTOMOBILE, ESPECIALLY A STEERING WHEEL HEATER
SYSTEME DE CHAUFFAGE POUR CHAUFFER UNE PIECE MOBILE D'UN VEHICULE AUTOMOBILE, EN PARTICULIER CHAUFFAGE DE VOLANT

(30) Priorität: 04.02.1998 DE 29802579 U
(43) Veröffentlichungstag der Anmeldung: 29.11.2000
(73) Patentinhaber: Takata-Petri AG, 63743 Aschaffenburg (DE)
(72) Erfinder: BONN, Helmut, D-63808 Haibach (DE); GERMUTH-LÖFFLER, Michael, D-63741 Aschaffenburg (DE)
(74) Vertreter: Baumgärtel, Gunnar, Dr.
(86) Internationale Anmeldenummer: EP9900640
(87) Internationale Veröffentlichungsnummer: WO99039963

(56) Entgegenhaltungen:
- DE-A- 4 108 114

## Beschreibung

Die Erfindung betrifft eine Heizungsanordnung für die Beheizung eines beweglichen Teils eines Kraftfahrzeuges, insbesondere Lenkradheizung, nach dem Oberbegriff des Anspruchs 1.

Es ist bekannt, begreifbare Teile eines Kraftfahrzeuges, insbesondere das Lenkrad, zu beheizen. Zum Beispiel ist aus der DE-A-41 08 114 ein Lenkrad mit elektrischer Beheizung bekannt. Dort ist im Bereich der Oberfläche der Lenkradumhüllung ein Heizleiter aus Kupferdraht vorgesehen, der mit einer Stromversorgungseinrichtung des Fahrzeuges über eine Schaltvorrichtung verbunden ist. Diese dient in Verbindung mit einem Thermosensor der gezielten Einschaltung der Heizung. Aus der Praxis ist es bekannt, die Heizung mit der Bordspannung von 12 Volt und einer Stromstärke von 8 Ampère zu betreiben. Wegen dieser großen Stromstärke ist es in der Praxis üblich, den Strom von der Batterie über eine Kontakteinheit mit Schleifring/Schieifkohle zum Lenkrad zu übertragen, weil bei der Übertragung mittels Bandleiter dieser wegen des erforderlichen Mindestquerschnitts nicht mehr ausreichend flexibel ist, und weil weniger Leiter in eine Kontakteinheit eingebracht und somit weniger Verbraucher angesteuert werden können.

Der Erfindung liegt die Aufgabe zugrunde, die Heizungsanordnung über einen ausreichend flexiblen Bandleiter mit einem solchen Querschnitt mit Elektroenergie zu versorgen, wie er für die Versorgung der übrigen Verbraucher im Lenkrad üblich ist.

Erfindungsgemäß wird das gemäß den Merkmalen des Anspruchs 1 erreicht.

Bei einer Heizungsanordnung für die Beheizung eines beweglichen begreifbaren Teils eines Kraftfahrzeuges, insbesondere bei einer Lenkradheizung, die über eine Kontakteinheit mit Stator und Rotor mit einer Elektroenergiequelle im stationären Bereich des Kraftfahrzeuges verbunden ist, ist erfindungsgemäß im stationären Bereich des Kraftfahrzeuges vor der Kontakteinheit oder im Stator der Kontakteinheit ein Spannungswandler für die Heizungsanordnung zur Erzeugung einer Spannung angeordnet, die größer als die 12 Volt Standard-Spannung im Kraftfahrzeug ist. Die Spannung liegt insbesondere zwischen 35 und 50 Volt und beträgt bei einer bevorzugten Ausführungsform 48 Volt.

Durch die Erhöhung der Spannung kann für eine vorgegebene Heizleistung die Stromstärke reduziert werden und es ist möglich, Flachbandleiter mit so geringen Querschnitten einzusetzen, daß sie ausreichend flexibel sind. Wegen der geringen Querschnitte muß die Anzahl der Flachbandleiter in der Kontakteinheit gegenüber einer Anordnung ohne Heizung nicht verringert werden.

Als Spannungswandler ist vorzugsweise ein DC/DC-Wandler vorgesehen.

Es ist weiterhin zweckmäßig, daß der Heizungsanordnung eine Steuerelektronik mit Temperatursensor für die Einhaltung vorbestimmter Maximal- oder Minimaltemperaturen des zu beheizenden Teiles zugeordnet ist.

Die Erfindung soll in einem Ausführungsbeispiel anhand von Zeichnungen erläutert werden. Es zeigen:

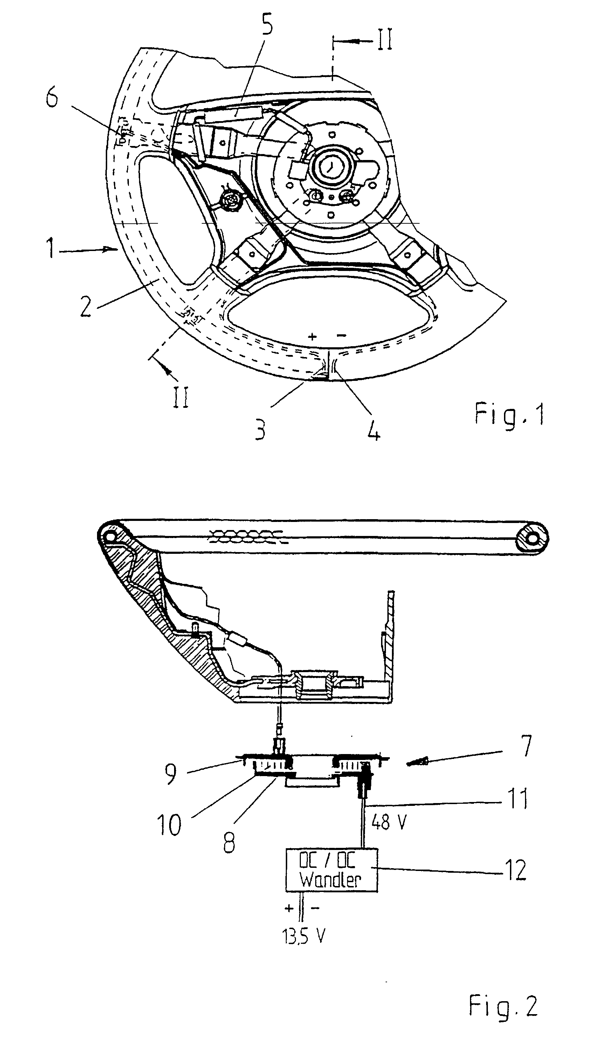

- Fig. 1: eine Draufsicht auf einen Abschnitt eines Lenkrades;
- Fig. 2: einen Schnitt II - II nach Fig. 1;

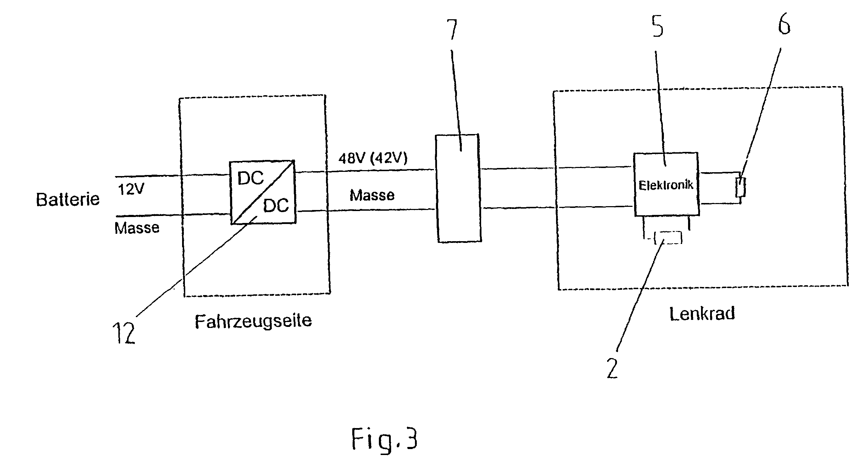

- Fig. 3: ein Blockschaltbild für eine Heizvorrichtung.

In der Umhüllung eines Lenkrades 1 ist eine Heizungsanordnung 2 mit Anschlußleitungen 3, 4 angeordnet. Der Heizungsanordnung ist eine Steuerelektronik 5 und ein Temperatursensor 6 zugeordnet. Die Anschlußleitungen 3, 4 sind mit dem Rotor 9 einer Kontakteinheit 7 verbunden. Zwischen dem Rotor 9 und einem Stator 8 verlaufen in bekannter Weise Flachbandleiter 10.

Zwischen dem Stator 8 und der nicht dargestellten stationären Spannungsquelle, an deren Ausgang eine Spannung von 12 bzw. 13, 5 Volt liegt, ist ein DC/DC-Wandler 12 angeordnet, dessen Ausgang über eine Zuleitung 11 mit dem Stator 8 verbunden ist. Der DC/DC-Wandler 12 transformiert die Spannung auf 48 Volt. Diese liegt am Eingang des Stators an und ermöglicht, auch für die Heizung einen Flachbandleiter mit geringem Querschnitt zu verwenden, wie er für die Versorgung der übrigen Verbraucher im Lenkrad, die weiterhin mit einer Spannung von 12 Volt betrieben werden, üblich ist.

## Patentansprüche

1. Heizungsanordnung für die Beheizung eines beweglichen begreifbaren Teils eines Kraftfahrzeuges, insbesondere Lenkradheizung, die über eine Kontakteinheit mit Stator und Rotor mit einer Elektroenergiequelle im stationären Bereich des Kraftfahrzeuges verbunden ist,
**dadurch gekennzeichnet,**
**daß** im stationären Bereich des Kraftfahrzeuges vor der Kontakteinheit (7) oder im Stator (8) der Kontakteinheit ein Spannungswandler (12) für die Heizungsanordnung (2) zur Erzeugung einer Spannung angeordnet ist, die größer als die 12 Volt Standard-Spannung im Kraftfahrzeug ist.

2. Heizungsanordnung nach Anspruch 1, **dadurch gekennzeichnet, daß** die Spannung zwischen 35 und 50 Volt liegt.

3. Heizungsanordnung nach Anspruch 1 oder 2, **dadurch gekennzeichnet, daß** die Spannung 48 Volt beträgt.

4. Heizungsanordnung nach mindestens einem der vorhergehenden Ansprüche, **dadurch gekennzeichnet, daß** als Spannungswandler ein DC/DC-Wandler (12) vorgesehen ist.

5. Heizungsanordnung nach mindestens einem der vorhergehenden Ansprüche, **dadurch gekennzeichnet, daß** der Heizungsanordnung (2) eine Steuerelektronik (5) mit Temperatursensor (6) für die Einhaltung vorbestimmter Maximal- oder Minimaltemperaturen des zu beheizenden Teiles zugeordnet ist.

## Claims

1. Heating device for heating a movable part of a motor vehicle which can also be held, more particularly a steering wheel heater, which is connected to a source of electric energy in the stationary part of the vehicle through a contact unit having stator and rotor,
**characterised in that**
a voltage converter (12) for the heating device (2) is provided in the stationary part of the vehicle, in front of the contact unit (7) or in the stator (8) of the contact unit, to generate a voltage which is higher than the 12 volt standard voltage in the vehicle.

2. Heating device according to claim 1 **characterised in that** the voltage is between 35 and 50 volts.

3. Heating device according to claim 1 or 2 **characterised in that** the voltage is 48 volts.

4. Heating device according to at least one of the preceding claims **characterised in that** a DC/DC converter (12) is provided as the voltage converter.

5. Heating device according to at least one of the preceding claims **characterised in that** the heating device (2) is associated with a control electronics (5) with temperature sensor (6) for observing the predetermined maximum or minimum temperatures of the part which is to be heated.

## Revendications

1. Système de chauffage pour chauffer une pièce mobile d'un véhicule automobile susceptible d'être agrippée, en particulier chauffage de volant, qui est relié via une unité de contact avec le stator et le rotor d'une source d'énergie électrique dans la région stationnaire du véhicule,
**caractérisé en ce qu'**un transformateur de tension est agencé dans la région stationnaire du véhicule en amont de l'unité de contact (7) ou dans le stator (8) de l'unité de contact, pour le système de chauffage (2), pour engendrer une tension qui est supérieure à la tension standard de 12 volts dans le véhicule.

2. Système de chauffage selon la revendication 1, **caractérisé en ce que** la tension est entre 35 et 50 volts.

3. Système de chauffage selon l'une ou l'autre des revendications 1 et 2, **caractérisé en ce que** la tension est de 48 volts.

4. Système de chauffage selon au moins l'une des revendications précédentes, **caractérisé en ce qu'**il est prévu un convertisseur à courant continu (12) à titre de transformateur de tension.

5. Système de chauffage selon au moins l'une des revendications précédentes, **caractérisé en ce qu'**au système de chauffage (2) est associé un système de commande électronique (5) avec capteur de température (6) pour respecter des températures maximum ou mimum prédéterminées de la pièce à chauffer.
